# EUROPÄISCHE PATENTANMELDUNG

(11) **EP 2 503 191 A1**
(43) Veröffentlichungstag der Anmeldung: **26.09.2012**
(21) Anmeldenummer: 12157741.5
(22) Anmeldetag: 01.03.2012
(51) Int. Cl.: F16H 47/04, B60K 17/14, B60K 17/344, F16H 3/54

(54) **Hydromechanisches Getriebe mit einem Hydromotor und einem mechanischen Stufenschaltgetriebe**

(30) Priorität: 21.03.2011 DE 102011014589
(71) Anmelder: Linde Material Handling GmbH, 63743 Aschaffenburg (DE)
(72) Erfinder: Welschof, Dr., Bernward, 63762 Großostheim (DE); Schwarz, Ulrich, 63741 Aschaffenburg (DE)
(74) Vertreter: Geirhos, Johann

(57) **Zusammenfassung**

Die Erfindung betrifft ein hydromechanisches Getriebe mit einem durch eine Hydropumpe antreibbaren Hydromotor (1) eines hydrostatischen Stufenlosgetriebes und einem an eine Triebwelle (4) des Hydromotors (1) angeschlossenen mechanischen Stufenschaltgetriebe (11), das durch eine Getriebeschalteinrichtung (17) im Betrieb schaltbar ist. Um das hydromechanische Getriebe bei möglichst kompakter Bauweise mit geringem Aufwand an unterschiedlichste Einbaufälle anpassen zu können, ist erfindungsgemäß die Getriebeschalteinrichtung (17) unmittelbar benachbart zum Hydromotor (1) angeordnet und mit diesem zu einer vormontierten Baueinheit zusammengefasst.

## Beschreibung

Die Erfindung betrifft ein hydromechanisches Getriebe mit einem durch eine Hydropumpe antreibbaren Hydromotor eines hydrostatischen Stufenlosgetriebes und einem an eine Triebwelle des Hydromotors angeschlossenen mechanischen Stufenschaltgetriebe, das durch eine Getriebeschalteinrichtung im Betrieb schaltbar ist.

Ein gattungsgemäßes hydromechanisches Getriebe ist in der EP 1 231 413 A2 beschrieben und kann in mobilen Arbeitsmaschinen, wie z.B. Telehandler sowie Bau- und Erntemaschinen, zum Einsatz kommen. Dabei kann infolge der zweistufigen Ausführung des Stufenschaltgetriebes zwischen einem Arbeitsgang und einem Transportgang gewechselt und im Gegensatz zu sogenannten Stillstandsgetrieben im Betrieb, also bei fahrender Arbeitsmaschine, geschaltet werden. Durch den Transportgang sind Fahrgeschwindigkeiten von 40 km/h und mehr erzielbar, um einen Einsatzort der Arbeitsmaschine in möglichst kurzer Zeit zu erreichen. Im Arbeitsgang des Stufenschaltgetriebes, also bei niedrigen Fahrgeschwindigkeiten einer mit dem hydromechanischen Getriebe ausgerüsteten Arbeitsmaschine, reicht der stufenlos veränderbare Übersetzungsbereich des hydrostatischen Stufenlosgetriebes in der Regel aus und erfordert keine zusätzliche Spreizung.

Um bei einem hydromechanischen Getriebe mit einer Schaltverzahnung im Stufenschaltgetriebe im Betrieb, d.h. während der Fahrt, schalten zu können, ist eine elektrohydraulische Synchronisation vorgesehen. Hierbei erfolgt durch eine Veränderung des Übersetzungsverhältnisses im Stufenlosgetriebe eine zum Stufensprung im Stufenschaltgetriebe korrelierende Drehzahlanpassung. Die Zugkraft ist während des Schaltvorgangs im Stufenschaltgetriebe für kurze Zeit unterbrochen, was sich bei einer Transportfahrt jedoch nicht negativ auswirkt.

Ist das Stufenschaltgetriebe als Lastschaltgetriebe ausgeführt, dann sorgen Lamellenkupplungen ohne Unterbrechung der Zugkraft für das Umschalten zwischen dem Arbeitsgang und dem Transportgang. Der Schaltvorgang in einem derartigen Stufenschaltgetriebe kann zusätzlich dadurch unterstützt werden, dass die Übersetzung im Stufenlosgetriebe in Richtung einer Drehzahlsynchronisation verstellt wird.

Bei dem hydromechanischen Getriebe der EP 1 231 413 A2, das als Stirnradgetriebe ausgeführt und mit Schaltverzahnungen versehen ist, kommt ein als Schrägachsenmotor ausgebildeter Hydromotor zum Einsatz, der in ein Getriebegehäuse des Stufenschaltgetriebes eingesteckt ist, wobei eine Eingangswelle des Stufenschaltgetriebes mit einer Verzahnung einer Triebwelle des Hydromotors in Eingriff kommt. Die Getriebeeingangswelle ist einerseits in einem Getriebegehäuse und andererseits auf der Triebwelle des Hydromotors abgestützt. Die Getriebeschalteinrichtung des Stufenschaltgetriebes ist dem Stufenschaltgetriebe zugeordnet. Hierbei bilden eine Schaltmuffe samt Betätigungshebel und ein hydraulischer Schaltzylinder samt elektromagnetisch betätigbaren Schaltventilen integrale Bestandteile des Stufenschaltgetriebes.

Da bei hydromechanischen Getrieben häufig das Stufenlosgetriebe und das Stufenschaltgetriebe von verschiedenen Herstellern stammen, sind umfangreiche konstruktive Maßnahmen erforderlich, um das Verhalten des hydrostatischen Stufenlosgetriebes und die Schaltkräfte und Schaltwege im Stufenschaltgetriebe aufeinander abzustimmen, damit in Abhängigkeit von der Charakteristik und dem Betriebsverhalten des Stufenlosgetriebes störungsfrei im Sinne eines optimalen Ablaufs des Schaltvorgangs im Stufenschaltgetriebe geschaltet werden kann.

Bei einem Herstellerwechsel des Stufenschaltgetriebes ist beim Hersteller des Stufenlosgetriebes, der in der Regel für das Gesamtsystem verantwortlich ist, ein erneuter Arbeitsaufwand nötig, da die mit dem Stufenlosgetriebe in Wirkverbindung stehende Getriebeschalteinrichtung in der Regel eine andere ist als bisher. Es ist deshalb erforderlich, für jede Getriebekombination eine geeignete, an das Stufenlosgetriebe angepasste Getriebeschalteinrichtung bereitzustellen, was nachteiligerweise eine hohe Varianz nach sich zieht. Darüber hinaus schränkt diese Varianz die konstruktive Freiheit hinsichtlich einer Optimierung der Abmessungen des hydromechanischen Getriebes ein.

Der vorliegenden Erfindung liegt die Aufgabe zu Grunde, ein hydromechanisches Getriebe der eingangs genannten Art zur Verfügung zu stellen, das bei möglichst kompakter Bauweise mit geringem Aufwand an unterschiedlichste Einbaufälle anpassbar ist.

Diese Aufgabe wird erfindungsgemäß dadurch gelöst, dass die Getriebeschalteinrichtung unmittelbar benachbart zum Hydromotor angeordnet und mit diesem zu einer vormontierten Baueinheit zusammengefasst ist.

Vorteilhafte Weiterbildungen und Ausgestaltungen der Erfindung sind in den Unteransprüchen angegeben.

Der erfindungswesentliche Gedanke besteht im vorliegenden Fall demnach darin, die Getriebeschalteinrichtung des Stufenschaltgetriebes, die in Abhängigkeit von der Einstellung des hydrostatischen Stufenlosgetriebes betätigt werden muss, funktionell dem Hydromotor zuzuordnen. Somit ist die Getriebeschalteinrichtung im Prinzip integraler Bestandteil des Hydromotors. Die Schaltkräfte und die Schaltwege können daher auf ein einheitliches Schaltkonzept hin ausgelegt werden und es ist möglich, mit nur wenigen Varianten auszukommen.

Das Stufenschaltgetriebe kann daher wesentlich einfacher aufgebaut werden, als bisher möglich. Bei einem Herstellerwechsel des Stufenschaltgetriebes und damit auch bei einer Konstruktionsänderung des Stufenschaltgetriebes werden durch den vereinfachten Getriebeaufbau auch die erforderlichen konstruktiven Anpassungen geringer. Was den Schaltvorgang im Stufenschaltgetriebe anbetrifft, bei dem das Stufenlosgetriebe und die Getriebeschalteinrichtung des Stufenschaltgetriebes, insbesondere bei Ausführung mit elektrohydraulischer Synchronisation, optimal zusammenwirken müssen, liegt die Schaltkompetenz und die Verantwortung für die Schaltfunktion durch die erfindungsgemäße Kombination des Hydromotors mit der Getriebeschalteinrichtung nunmehr bei nur einem Hersteller, nämlich dem Hersteller des Hydromotors bzw. des Stufenlosgetriebes.

Die Getriebeschalteinrichtung ist mit Vorteil Platz sparend im Bereich eines Axialabschnitts der Triebwelle angeordnet, der aus einem Triebwellenbereich herausragt, welcher von zwei mit Abstand zueinander angeordneten Triebwellenlagern axial begrenzt ist.

Im Anschluss an diesen Bereich befindet sich das Stufenschaltgetriebe, dessen Schaltstufen durch die Getriebeschalteinrichtung in und außer Eingriff gebracht werden.

In Ausgestaltung der Erfindung ist die Getriebeschalteinrichtung hydraulisch betätigbar und am Hydromotor gehaltert. Hierbei erweist sich einerseits die erfindungsgemäße Anordnung der Getriebeschalteinrichtung unmittelbar benachbart zum Hydromotor als besonders vorteilhaft, denn es ist nur ein geringer Aufwand erforderlich, um in diesem Bereich die zur hydraulischen Betätigung der Getriebeschalteinrichtung benötigten hydraulischen Anschlüsse zur Verfügung zu stellen. Andererseits ermöglicht die Fixierung der Getriebeschalteinrichtung am Hydromotor bzw. an dafür ausgebildeten Bauteilen des Hydromotors, z.B. dem Motorgehäuse oder der Triebwelle, die konstruktiv einfache Zusammenfassung der Getriebeschalteinrichtung mit dem Hydromotor zu einer vormontierten Baueinheit.

Die Getriebeschalteinrichtung weist mit Vorteil mindestens einen axial beweglichen Schaltaktuator auf, der durch einen in einem Steuerdruckraum anstehenden Öldruck betätigbar ist.

Um der Getriebeschalteinrichtung bzw. dem Steuerdruckraum auf besonders einfache Weise Drucköl zuführen zu können, wird gemäß einer vorteilhaften Ausgestaltung der Erfindung vorgeschlagen, dass die Triebwelle mit einem Längskanal versehen ist, der an einem getriebeseitigen Ende der Triebwelle mit dem Steuerdruckraum der Getriebeschalteinrichtung verbunden ist.

Der Längskanal ist in vorteilhafter Ausgestaltung der Erfindung an einem getriebefernen Ende der Triebwelle an eine Drehdurchführung angeschlossen.

Sofern die Drehdurchführung eine drehfeste Durchgangsbuchse aufweist, die in einer an den zentrisch angeordneten Längskanal anschließenden, in die getriebeferne Stirnseite der Triebwelle eingearbeitete Zentralbohrung im Stützbereich des getriebefernen Triebwellenlagers endet, bleibt die Leckage in allen Betriebszuständen gering. Hierbei sind Auswirkungen aus einer möglichen Schiefstellung der Triebwelle und damit der Zentralbohrung relativ zur Durchgangsbuchse, die bei einer Durchbiegung der Triebwelle auftreten können, minimiert.

Hinsichtlich einer möglichst kompakten Bauweise und eines optimalen Betriebsverhaltens des erfindungsgemäßen hydromechanischen Getriebes ist es günstig, wenn das Stufenschaltgetriebe und der Hydromotor miteinander zu einer Getriebeeinheit verbunden sind. Diese Getriebeeinheit weist nicht nur ein Schaltverhalten auf, bei dem Hydromotor, Schalteinrichtung und Stufenschaltgetriebe im Sinne eines funktionssicheren und weichen Schaltvorgangs aufeinander abgestimmt sind, sondern bildet darüber hinaus auch eine einbaufertige Baugruppe, die in unterschiedlichsten Arbeitsmaschinen zum Einsatz kommen kann. Aus dem Hydromotor wird also ein Schaltmotor bzw. ein Synchronschaltmotor.

Das Stufengeschaltgetriebe kann dabei ein die Getriebeschalteinrichtung umschließendes Getriebegehäuse aufweisen.

Es wird ferner vorgeschlagen, dass das Stufenschaltgetriebe ein Planetengetriebe, insbesondere einstufiges Planetengetriebe, aufweist, das ein Sonnenrad, einen mit Planetenrädern versehenen Planetenträger und ein Hohlrad umfasst. Hierbei sind mit geringstmöglichen Abmessungen und Aufwand zwei Übersetzungen erzielbar, was für viele Anwendungsfälle ausreichend ist. Das erfindungsgemäße hydromechanische Getriebe stellt dadurch ein Kompaktgetriebe dar, das nur wenig Einbauraum benötigt.

Von Vorteil ist es dabei, wenn das Sonnenrad des Planetengetriebes radial und axial auf der Triebwelle des Hydromotors abgestützt ist. Es ist dann keine separate Lagerung des Sonnenrades im Stufenschaltgetriebe erforderlich. Verzahnungskräfte werden von der Lagerung der Triebwelle aufgenommen.

In Weiterbildung der Erfindung wird vorgeschlagen, dass der Planetenträger auf einer Getriebewelle des Stufenschaltgetriebes befestigt ist.

Gemäß einer Ausgestaltung der Erfindung können zur Drehmomentübertragung im Stufengeschaltgetriebe hydraulisch beaufschlagbare Lamellenkupplungen vorgesehen sein. Die Verwendung von Lamellenkupplungen ermöglicht es, das Stufenschaltgetriebe als Lastschaltgetriebe auszuführen, bei dem keine Drehzahlsynchronisation vor dem Schalten erfolgen muss. Gleichwohl ist auch ein Einsatz in einem als Synchronschaltgetriebe ausgeführten Stufenschaltgetriebe möglich, bei dem vor dem Gangwechsel die Drehzahlen synchronisiert werden und die Lamellenkupplungen ausschließlich der reibschlüssigen Drehmomentübertragung dienen, also nicht der Drehzahlanpassung.

In Weiterbildung der Erfindung ist eine Lamellenkupplung vorgesehen, die wechselweise mit einem drehfesten Bauteil und dem Hohlrad des Planetengetriebes gekoppelte Lamellen aufweist.

In diesem Zusammenhang ist es günstig, wenn ein Lamellenträger an einem Motorgehäuse des Hydromotors befestigt oder daran angeformt ist. Das drehfeste Bauteil ist somit als Lamellenträger ausgebildet.

Sofern ein Federspeicher zur Beaufschlagung einer Lamellenkupplung in Schließrichtung vorgesehen ist, stellt sich bei einer dem Hohlrad des Planetengetriebes zugeordneten Lamellenkupplung ein definierter Vorzugszustand des Hohlrads bei fehlendem oder nicht ausreichendem Druck des hydraulischen Druckmittels ein, bei dem das Hohlrad gegenüber dem Hydromotor festgebremst ist.

Zweckmäßigerweise ist ferner eine Lamellenkupplung vorgesehen, die wechselweise mit dem Planetenträger und dem Sonnenrad gekoppelte Lamellen aufweist. Auch hier kann ein Federspeicher zur Beaufschlagung der Lamellenkupplung in Schließrichtung vorgesehen sein.

Alternativ zu einer Ausführung des Stufenschaltgetriebes mit drehmomentübertragenden Lamellen wird vorgeschlagen, dass zur Drehmomentübertragung im Stufenschaltgetriebe Schaltverzahnungen vorgesehen sind.

Hierbei ist mit Vorteil eine Schaltverzahnung an einer axial beweglichen, drehsynchron mit der Triebwelle des Hydromotors gekoppelten Schaltmuffe gebildet, die durch einen direkt oder indirekt hydraulisch beaufschlagbaren Schaltaktuator verschiebbar ist.

Die Schaltverzahnung der Schaltmuffe ist mit einer Schaltverzahnung des Planetenträgers in Eingriff bringbar. Der Schaltaktuator ist mit einer Schaltverzahnung versehen, die mit einer Schaltverzahnung des Hohlrads in Eingriff bringbar ist.

Durch axiales Verschieben des Schaltaktuators und damit der Schaltmuffe können drei Schaltstellungen erzielt werden: In einer ersten Schaltstellung, die dem Leerlauf entspricht, steht weder die Schaltverzahnung der Schaltmuffe noch die Schaltverzahnung des Schaltaktuators mit einer Gegenverzahnung in Eingriff.

In einer zweiten Schaltstellung, die dem ersten Gang, also dem Arbeitsgang entspricht, sind durch hydraulische Druckbeaufschlagung des Schaltaktuators dieser und die damit gekoppelte Schaltmuffe axial in eine Position verschoben, in der die Schaltverzahnung des drehfesten Schaltaktuators mit der Schaltverzahnung des Hohlrades in Eingriff steht, während die Schaltverzahnungen der Schaltmuffe und des Planetenträgers frei sind. Somit ist im Planetengetriebe die Untersetzungsstufe wirksam.

In einer dritten Schaltposition, die dem zweiten Gang, also dem Transportgang entspricht, sind durch hydraulische Druckbeaufschlagung des Schaltaktuators dieser und die damit gekoppelte Schaltmuffe axial in eine Position verschoben, in der die Schaltverzahnung der Schaltmuffe mit der Schaltverzahnung des Planetenträgers in Eingriff steht, während die Schaltverzahnungen des Schaltaktuators und des Hohlrades frei sind. Somit ist das Planetengetriebe auf Durchtrieb geschaltet.

Für definierte Schaltstellungen steht der Schaltaktuator mit einem Arretierbolzen in Wirkverbindung, der Ringnuten aufweist, die zum Eingriff mit einer federbelasteten Arretierkugel ausgebildet sind.

Der Schaltaktuator kann zum Wechsel der Schaltstellungen direkt mit Hilfe angeformter Steuerflächen durch Drucköl hydraulisch beaufschlagt werden. Es ist jedoch auch möglich, dass der Schaltaktuator mit einem Schaltkolben eines hydraulischen Schaltzylinders verbunden ist. Hierbei liegt dann eine indirekte Druckbeaufschlagung vor, die den Vorteil hat, dass der Schaltaktuator universeller ausgebildet sein kann.

Im Zusammenhang mit dieser Ausführung der Erfindung erweist es sich als günstig, wenn der bereits erwähnte Arretierbolzen mit dem Schaltkolben verbunden ist, beispielsweise in axialer Verlängerung daran angeformt ist. Dabei ergibt sich ein hoher Integrationsgrad und eine kompakte Bauweise.

In vorteilhafter Weiterbildung der Erfindung weist der Schaltkolben eine Kolbenstange und einen im Durchmesser vergrößerten, mittleren Kolbenabschnitt auf, der an beiden Stirnseiten jeweils mit einer im Außendurchmesser abgestuften Anschlagbuchse in Wirkverbindung bringbar ist, die in einem zur Abstufung korrelierenden Stufenbereich einer Zylinderbohrung des Schaltzylinders angeordnet ist. Dadurch kann beim Umschalten vom Arbeitsgang zum Transportgang und umgekehrt stets zuerst eine dem Leerlauf entsprechende Mittelstellung des Schaltkolbens erzielt werden, damit vor dem Einrücken des jeweils folgenden Ganges ausreichend Zeit bleibt, um durch das hydrostatische Stufenlosgetriebe eine Synchronisationsdrehzahl einzustellen.

Sofern die Getriebewelle des Stufenschaltgetriebes mit einem eingangsseitigen Zahnrad einer nachgeschalteten Stirnradstufe eines Verteilergetriebes verbunden ist, kann das erfindungsgemäße hydromechanische Getriebe beispielsweise als Einbausatz in einem Achsverteilergetriebe Verwendung finden, bei dem es in den Kraftfluss zwischen zwei Antriebsachsen geschaltet ist, um ein Allradfahrzeug anzutreiben.

Weitere Vorteile und Einzelheiten der Erfindung werden anhand des in den Figuren schematisch dargestellten Ausführungsbeispiels näher erläutert. Dabei zeigt
- Figur 1,: einen Längsschnitt durch ein hydromechanisches Getriebe gemäß der Erfindung,
- Figur 2,: einen Längsschnitt durch eine erste Variante eines hydromechanischen Getriebes gemäß der Erfindung,
- Figur 3,: einen Längsschnitt durch eine zweite Variante eines hydromechanischen Getriebes gemäß der Erfindung,
- Figur 4,: einen Längsschnitt durch eine dritte Variante eines hydromechanischen Getriebes gemäß der Erfindung,
- Figur 5,: einen Längsschnitt durch eine vierte Variante eines hydromechanischen Getriebes gemäß der Erfindung,
- Figur 6,: einen Längsschnitt durch eine fünfte Variante eines hydromechani- schen Getriebes gemäß der Erfindung,
- Figur 7: eine Darstellung zur Montage des hydromechanischen Getriebes,
- Figur 8: einen Längsschnitt durch eine sechste Variante eines hydromechanischen Getriebes,
- Figur 9: eine Draufsicht auf den Schaltaktuator der Variante gemäß Figur 8 und
- Figur 10: einen Schnitt gemäß der Linie X-X in Figur 8.

Das erfindungsgemäße hydromechanische Getriebe weist einen Hydromotor 1 auf, der im vorliegenden Ausführungsbeispiel als Axialkolbenmotor in Schrägscheibenbauweise ausgeführt und mit einer nicht dargestellten Hydropumpe hydraulisch verbunden ist. Der Hydromotor 1 ist somit Teil eines hydrostatischen Stufenlosgetriebes.

Der Hydromotor 1 verfügt über ein topfförmiges Motorgehäuse 2, das durch einen als Steuerbodenaufnahme ausgebildeten Motordeckel 3 verschlossen ist. Aus dem Motorgehäuse 1 ist eine Triebwelle 4 herausgeführt, die in zwei voneinander axial beabstandeten Triebwellenlagern 5, 6 - im vorliegenden Ausführungsbeispiel als Kegelrollenlager ausgebildete Wälzlager - im Motorgehäuse 2 und im Motordeckel 3 gelagert ist. Ein mit Zylinderbohrungen 7a versehener Zylinderblock 7 ist drehsynchron, jedoch längsbeweglich mit der Triebwelle 4 gekoppelt. In den Zylinderbohrungen 7a sind mit Druckmittel beaufschlagbare Arbeitskolben 8 längsbeweglich, die über Gleitschuhe 8a auf einer im vorliegenden Ausführungsbeispiel verstellbaren, wiegenförmigen Schrägscheibe 9 abgestützt sind. Der Zylinderblock 7 liegt an einem scheibenförmigen Steuerboden 10 an, der an der Steuerbodenaufnahme, also am Motordeckel 3 gehaltert ist.

Ein zum Antrieb durch den Hydromotor 1 vorgesehenes Stufenschaltgetriebe 11 weist ein topfförmiges Getriebegehäuse 12 auf, das mit dem Motorgehäuse 2 verschraubt ist. In dem Getriebegehäuse 12 ist eine Getriebewelle 13 gelagert, die mit einem Planetenträger 14 eines innerhalb des Getriebegehäuses 12 angeordneten, im vorliegenden Ausführungsbeispiel einstufig ausgebildeten Planetengetriebes verbunden ist. Auf dem Planetenträger 14 sind Planetenräder 14a drehbar gelagert, die mit einem Hohlrad 15 des Planetengetriebes in Eingriff stehen. Die Planetenräder 14a stehen ferner mit einem Sonnenrad 16 in Eingriff, das an einem hülsenförmigen Sonnenradträger 16a angeformt ist, der drehsynchron mit der Triebwelle 4 des Hydromotors 1 verbunden ist. Das Sonnenrad 16 ist somit auf der Triebwelle 4 abgestützt und vom Sonnenrad 16 ausgehende radiale und axiale Kräfte (die z.B. aus einer Schrägverzahnung resultieren) werden von den Triebwellenlagern 5, 6 aufgenommen.

Um die bei einem einstufigen Planetengetriebe mit angetriebenem Sonnenrad 16 möglichen zwei Übersetzungsverhältnisse, nämlich einerseits Untersetzung bei feststehendem Hohlrad 15 und Abtrieb über den Planetenträger 14 und andererseits Durchtrieb bei frei drehbarem Hohlrad 15 und zum Sonnenrad 16 blockiertem Planetenträger 14, zu erzielen, ist unmittelbar benachbart zum Hydromotor 1 eine Getriebeschalteinrichtung 17 vorgesehen, die im vorliegenden Ausführungsbeispiel eine erste Lamellenkupplung 18 und eine zweite Lamellenkupplung 19 aufweist. Es versteht sich, dass es grundsätzlich auch möglich ist, das Stufenschaltgetriebe 11 mit mehr als zwei Übersetzungsverhältnissen bzw. Schaltstufen auszubilden, beispielsweise mittels eines zusätzlichen Planetengetriebes. In diesem Fall muss die Schalteinrichtung 17 entsprechend angepasst sein.

Die Getriebeschalteinrichtung 17 mit den beiden Lamellenkupplungen 18, 19 ist im Bereich eines Axialabschnitts der Triebwelle 4 angeordnet, der sich außerhalb des Motorgehäuses 2 befindet, also in einem Bereich, der aus einem von den zwei Triebwellenlagern 5, 6 axial begrenzten Triebwellenbereich herausragt und der axial zwischen dem Hydromotor 1 und dem Planetengetriebe angeordnet ist.

Die erste Lamellenkupplung 18 ist zwischen das Hohlrad 15 und das Motorgehäuse 2 geschaltet und verfügt zu diesem Zweck über Lamellen 18a, die wechselweise mit dem Hohlrad 15 und einem mit dem Motorgehäuse 2 verbundenen - im vorliegenden Ausführungsbeispiel angeformten - Lamellenträger 18b gekoppelt sind. Um die Lamellen 18a in und außer Eingriff miteinander zu bringen, ist ein hydraulisch betätigbarer, axial beweglicher Schaltaktuator 18c vorgesehen. Hierbei wirkt in Eingriffsrichtung der Lamellen 18a, also in Richtung zur Schließstellung der ersten Lamellenkupplung 18 ein Federspeicher 18d. Um die erste Lamellenkupplung 18 zu öffnen, ist der Schaltaktuator 18c entgegen der Federkraft durch den in einem axial zwischen dem Schaltaktuator 18c und einer Widerlagerplatte 18f angeordneten Steuerdruckraum 18e anstehenden Öldruck hydraulisch beaufschlagbar.

Die zweite Lamellenkupplung 19 ist zwischen den Planetenträger 14 und das Sonnenrad 16 geschaltet und verfügt zu diesem Zweck über Lamellen 19a, die wechselweise mit dem Planetenträger 14 und einem mit dem Sonnenrad 16 bzw. dem hülsenförmigen Sonnenradträger 16a drehsynchron verbundenen, also auf der Triebwelle 4 gehalterten Lamellenträger 19b gekoppelt sind. Die Lamellen 19a sind über einen axial beweglichen Schaltaktuator 19c in Eingriff miteinander bringbar. Hierbei wirkt in Eingriffsrichtung, also in Richtung zur Schließstellung der zweiten Lamellenkupplung 19 ein Federspeicher 19d. Um die zweite Lamellenkupplung 19 zu öffnen, ist der Schaltaktuator 19c entgegen der Federkraft durch den in einem Steuerdruckraum 19e anstehenden Öldruck hydraulisch beaufschlagbar. Der Steuerdruckraum 19e ist axial zwischen dem Schaltaktuator 19c und einer Widerlagerplatte 19f gebildet, die im vorliegenden Ausführungsbeispiel mit dem Lamellenträger 19b verschraubt ist.

Der Steuerdruckraum 19e ist zur Druckmittelversorgung an einen in die Triebwelle 4 des Hydromotors 1 eingearbeiteten, zentrisch angeordneten Längskanal 4a angeschlossen, der am getriebefernen Ende der Triebwelle 4 an einer Drehdurchführung 20 endet. Letztere weist eine drehfeste Durchgangsbuchse 21 auf, die in einer an den Längskanal 4a anschließenden, in die getriebeferne Stirnseite der Triebwelle 4 eingearbeiteten Zentralbohrung 4b im Stützbereich des getriebefernen Triebwellenlagers 5 endet. Eine Schiefstellung der Zentralbohrung 4b zur Durchgangsbuchse 21, die bei einer Durchbiegung der Triebwelle 4 auftreten kann, hat daher praktisch keine Auswirkungen auf die Dichtigkeit der Drehdurchführung 20. Die Leckage bleibt gering.

Die Durchgangsbuchse 21 befindet sich innerhalb eines zusammen mit der Triebwelle 4 rotierenden Drehsignalgebers 22, dessen Signale von einem Drehzahlsensor 23 erfasst werden. Ein weiterer Drehzahlsensor 24 befindet sich im Bereich der Getriebewelle 13 und wirkt mit einem Drehsignalgeber 25 zusammen, der zusammen mit der Getriebewelle 13 rotiert. Auf der Basis der von den Drehzahlsensoren 23 und 25 erfassten Werte für die Eingangs- und Ausgangsdrehzahl des hydromechanischen Getriebes kann vor dem Umschalten im Stufenschaltgetriebe 11 durch Übersetzungsanpassung im hydrostatischen Stufenlosgetriebe eine Drehzahlanpassung erfolgen. Aufgrund des Vorhandenseins der Lamellenkupplungen 18, 19 in der Schalteinrichtung 17 ist dies jedoch nicht zwingend erforderlich, denn die Lamellenkupplungen 18, 19 ermöglichen auch ein Schalten unter Last.

Insgesamt bildet somit die unmittelbar benachbart zum Hydromotor 1 angeordnete Getriebeschalteinrichtung 17 zusammen mit dem Hydromotor 1 eine vormontierte Baueinheit.

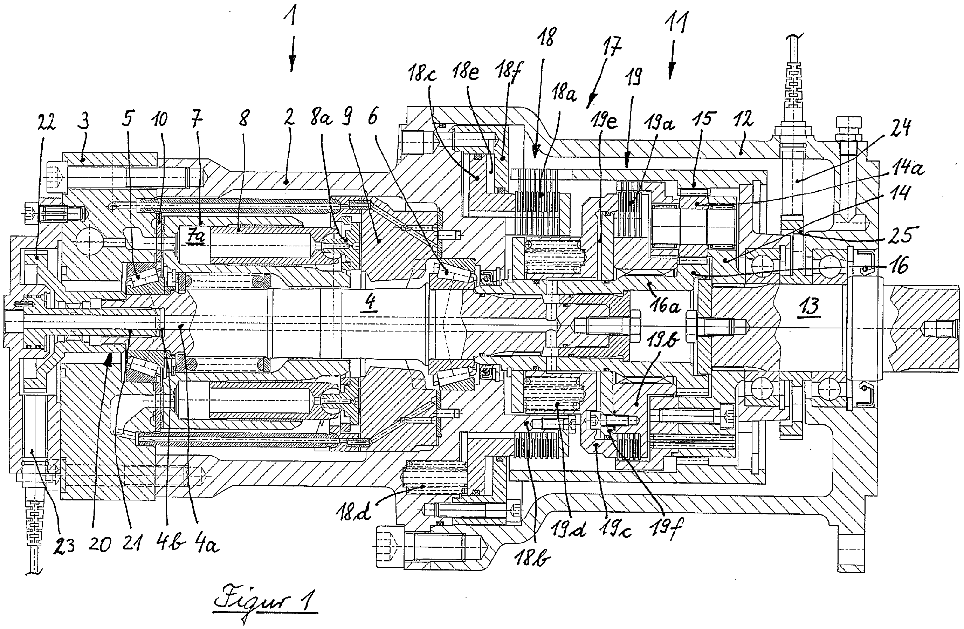

Das Stufenschaltgetriebe 11 des in Figur 1 dargestellten hydromechanischen Getriebes befindet sich bei unzureichenden Öldrücken in den Steuerdruckräumen 18e, 19e der Getriebeschalteinrichtung 17 aufgrund der Wirkung der beiden Federspeicher 18d, 18e in einer Betriebsart, in der die beiden Lamellenkupplungen 18, 19 geschlossen sind und dadurch das Stufenschaltgetriebe 11 im Sinne einer Parkbremse blockiert ist.

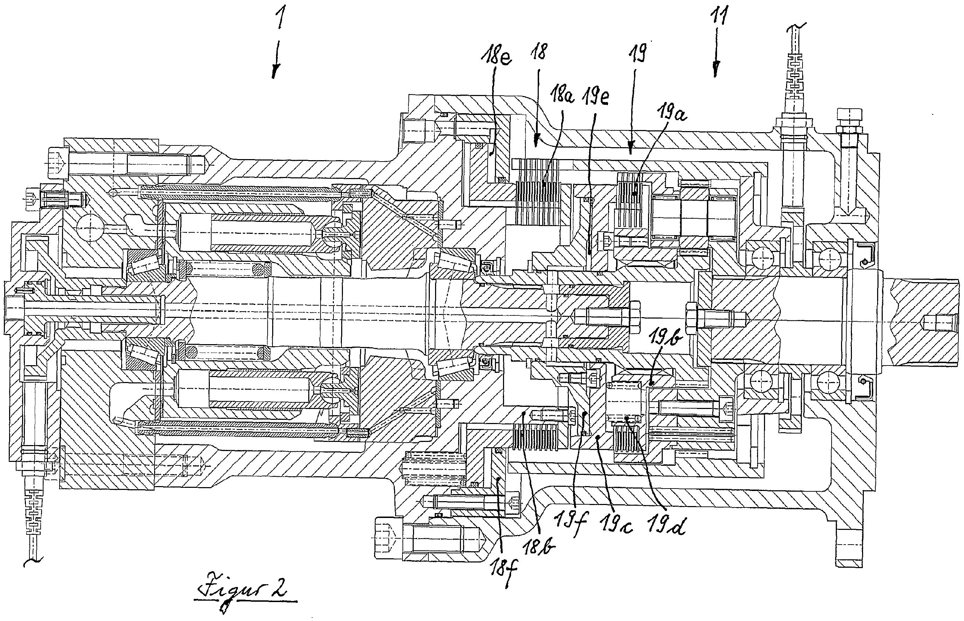

Bei der in Figur 2 dargestellten Variante des hydromechanischen Getriebes wirkt an der zweiten Lamellenkupplung 19 der Federspeicher 19d nicht in Schließ- sondern in Öffnungsrichtung und hat daher nur eine relativ geringe Federkraft, die ausreichend ist, um den Schaltaktuator 19c bei fehlendem Öldruck so weit zu verschieben, dass die Lamellen 19a frei drehen können. Der Öldruck im Steuerdruckraum 19e wirkt in Schließrichtung gegen die Federkraft. Bei dieser Ausführungsvariante befindet sich der Schaltaktuator 19c axial zwischen den Lamellen 19a und der Widerlagerplatte 19f und ist relativ zum Lamellenträger 19b und zur Widerlagerplatte 19f verdrehgesichert.

Bei fehlendem oder nicht ausreichendem Öldruck in den Steuerdruckräumen 18e, 19e der beiden Lamellenkupplungen 18, 19 befindet sich das Stufenschaltgetriebe 11 in der Betriebsart "Untersetzung" (d.h. im ersten Gang, entsprechend dem Arbeitsgang).

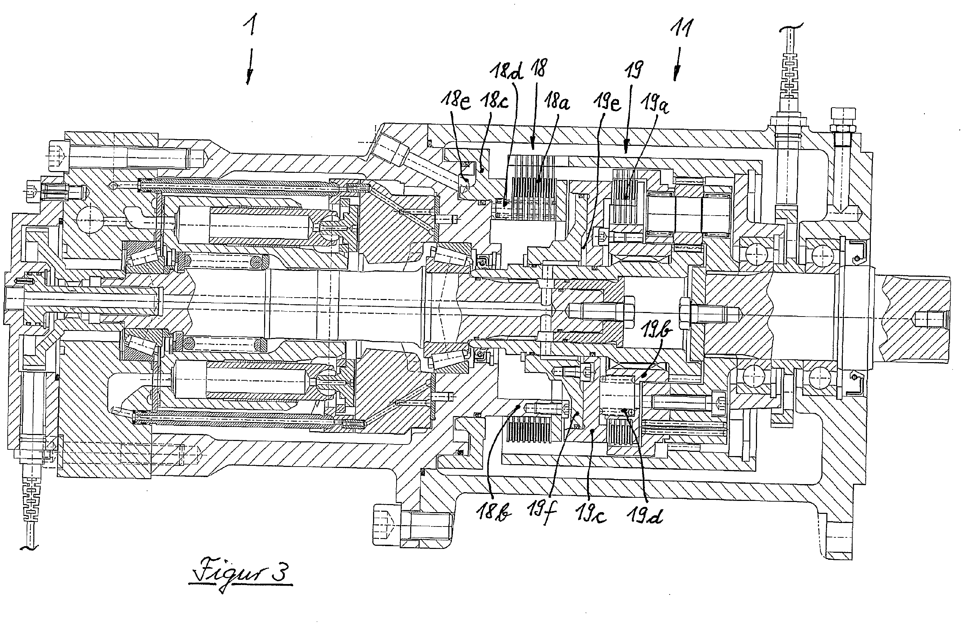

Die in Figur 3 dargestellte Variante des hydromechanischen Getriebes unterscheidet sich von den vorherigen Varianten dadurch, dass sowohl bei der ersten Lamellenkupplung 18 als auch bei der zweiten Lamellenkupplung 19 der Getriebeschalteinrichtung 17 der Federspeicher 18d bzw. 19d in Öffnungsrichtung wirkt und somit lediglich die Aufgabe hat, für Freigängigkeit der Lamellen 18a bzw. 19a zu sorgen, wenn die in Schließrichtung wirksamen Schaltaktuatoren 18c, 19c nicht mit Drucköl beaufschlagt sind. Um die Lamellenkupplungen 18, 19 zu schließen, ist somit jeweils ausreichend Öldruck im Steuerdruckraum 18e bzw. 19e erforderlich. Fehlt es daran, dann befindet sich das Stufenschaltgetriebe 11 in Neutralstellung (Leerlauf).

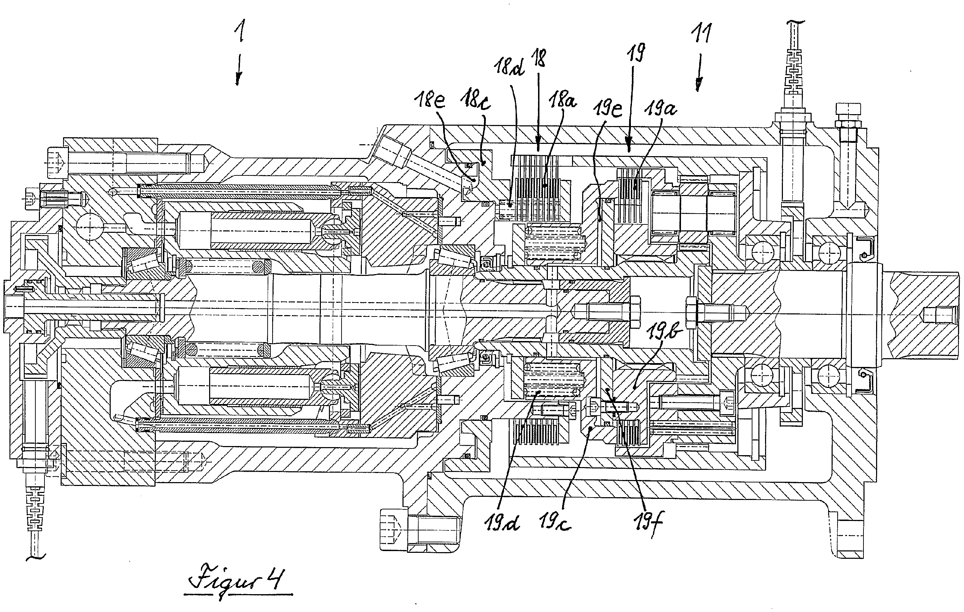

Das Stufenschaltgetriebe 11 des in Figur 4 dargestellten hydromechanischen Getriebes verfügt über eine Getriebeschalteinrichtung 17, bei der nur die zweite Lamellenkupplung 19 mit einem in Schließrichtung wirksamen Federspeicher 19d versehen ist, während der Federspeicher 18d der ersten Lamellenkupplung 18 in Öffnungsrichtung wirkt und demnach nur über eine relativ geringe Federkraft verfügt. Bei Ausfall der Öldruckversorgung ergibt sich deshalb eine Betriebsart mit Durchtrieb (d.h. zweiter Gang, entsprechend dem Transportgang), bei der die Getriebewelle 13 des Stufenschaltgetriebes 11 drehsynchron mit der Triebwelle 4 des Hydromotors 1 gekoppelt und nicht am Motorgehäuse 1 festgebremst ist.

Durch den in den Figuren 1 bis 4 dargestellten modularen Aufbau der Schalteinrichtung 17 sind mit nur wenigen Unterschiedsteilen verschiedene Ausfallsicherungen möglich, die bei nicht vorhandenem Öldruck wirksam werden.

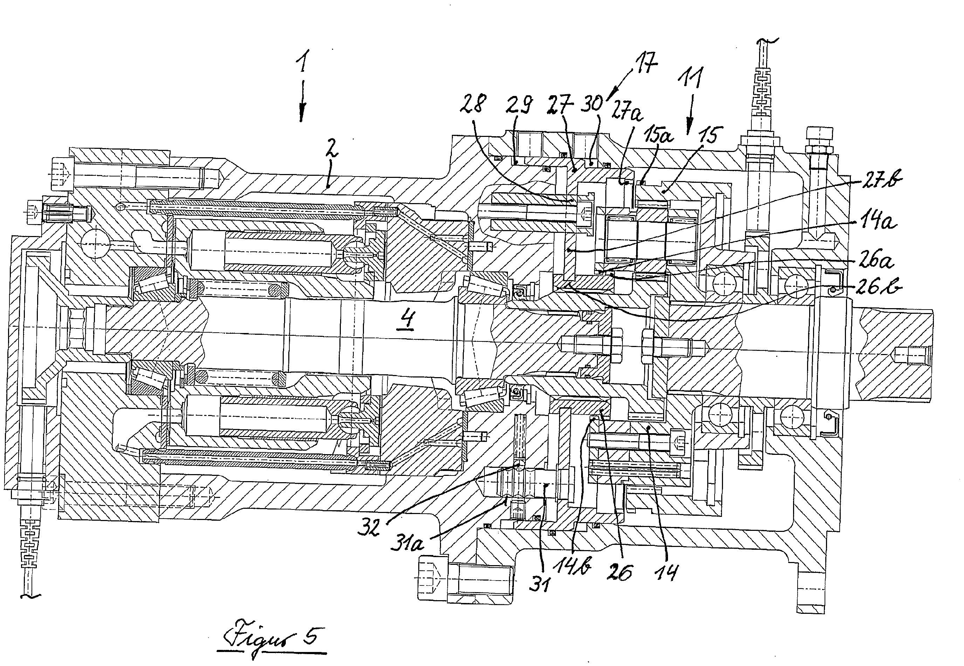

Zur Drehmomentübertragung im Stufenschaltgetriebe 11 können anstelle von Lamellenkupplungen auch Schaltverzahnungen vorgesehen sein, wie dies in der in Figur 5 dargestellten Ausführungsvariante der Fall ist. Dabei ist an einer axial beweglichen, drehstarr mit der Triebwelle 4 gekoppelten Schaltmuffe 26 eine Schaltverzahnung 26a angeformt, die in Eingriff mit einer am Planetenträger 14 angeformten Schaltverzahnung 14b bringbar ist. Die Schaltmuffe 26 steht mit einem Schaltaktuator 27 in Wirkverbindung, der drehfest, jedoch axial verschiebbar am Motorgehäuse 2 des Hydromotors 1 gehaltert ist. Am Schaltaktuator 27 sind Schaltverzahnungen 27a angeformt, die mit Schaltverzahnungen 15a des Hohlrads 15 in Eingriff bringbar sind. Dadurch kann das Hohlrad 15 gegenüber dem Motorgehäuse 2 des Hydromotors 1 festgelegt werden.

Der Schaltaktuator 27 ist abhängig von der Druckbeaufschlagung in zwei Steuerdruckräumen 29, 30 axial bewegbar, wobei die Axialbewegung unmittelbar auf die Schaltmuffe 26 übertragen wird. Zu diesem Zweck ist am Außenumfang der Schaltmuffe 26 eine Ringnut 26b eingearbeitet, in die ein Radialabschnitt 27b des Schaltkolbens 27 radial eintaucht. Als Verdrehsicherung des Schaltaktuators 27 sind auf einem zur Triebwelle 4 konzentrischen Teilkreis in die getriebenahe Stirnseite des Motorgehäuses 2 des Hydromotors 1 mehrere Auflagerbolzen 28 eingebracht, auf denen der Schaltkolben 27 axial verschoben werden kann.

Abhängig vom Öldruck in den Steuerdruckräumen 29 und 30, die funktionell den Steuerdruckräumen 18e und 19e in der Ausführungsvariante gemäß Figur 3 entsprechen, können durch dementsprechendes axiales Verschieben des Schaltaktuators 27 drei Schaltstellungen erzielt werden: Hierbei steht in einer ersten Schaltstellung, die dem Leerlauf entspricht und in Figur 5 dargestellt ist, weder die Schaltverzahnung 26a der Schaltmuffe 26 noch die Schaltverzahnung 27a des Schaltaktuators 27 mit einer Gegenverzahnung in Eingriff.

In einer zweiten Schaltstellung sind der Schaltkolben 27 und die damit gekoppelte Schaltmuffe 26 in eine Position axial verschoben (nach in der Figur rechts), in der die Schaltverzahnung 27a des drehfesten Schaltaktuators 27 mit der Schaltverzahnung 15a des Hohlrades 15 in Eingriff steht, während die Schaltverzahnung 26a der Schaltmuffe 26 und die Schaltverzahnung 14b des Planetenträgers 14 außer Eingriff sind. Im Planetengetriebe ist in dieser Schaltstellung die Untersetzungsstufe wirksam, denn das Hohlrad 15 ist relativ zum Motorgehäuse 2 festgelegt.

In einer dritten Schaltposition sind der Schaltaktuator 27 und die damit gekoppelte Schaltmuffe 26 in eine Position axial verschoben (nach in der Figur links), in der die Schaltverzahnung 26a der Schaltmuffe 26 mit der Schaltverzahnung 14b des (mehrteiligen) Planetenträgers 14 in Eingriff steht, während die Schaltverzahnungen 27a, 15a des Schaltaktuators 27 bzw. des Hohlrades 15 frei sind. Somit ist das Planetengetriebe in dieser Schaltstellung auf Durchtrieb geschaltet.

Damit die jeweils eingelegte Schaltstellung bei Wegfall des hydraulischen Öldruckes in den Steuerdruckräumen 29, 30 fixiert bleibt, ist der Schaltaktuator 27 mit einem Arretierbolzen 31 versehen, der Ringnuten 31 a aufweist, die zum Eingriff mit einer federbelasteten Arretierkugel 32 ausgebildet sind. Diese Arretiereinrichtung ist stirnseitig in das Motorgehäuse 2 des Hydromotors 1 integriert.

Im Gegensatz zu den in den Figuren 1 bis 4 dargestellten Ausführungsvarianten des hydromechanischen Getriebes erfolgt die Druckmittelversorgung der beider Steuerdruckräume 18e, 19e ohne einen in die Triebwelle 4 des Hydromotors 1 eingearbeiteten Längskanal. Dennoch gestaltet sich die Ölversorgung relativ einfach, denn die erforderlichen Versorgungsanschlüsse der Steuerdruckräume 29, 30 befinden sich unmittelbar am Hydromotor 1.

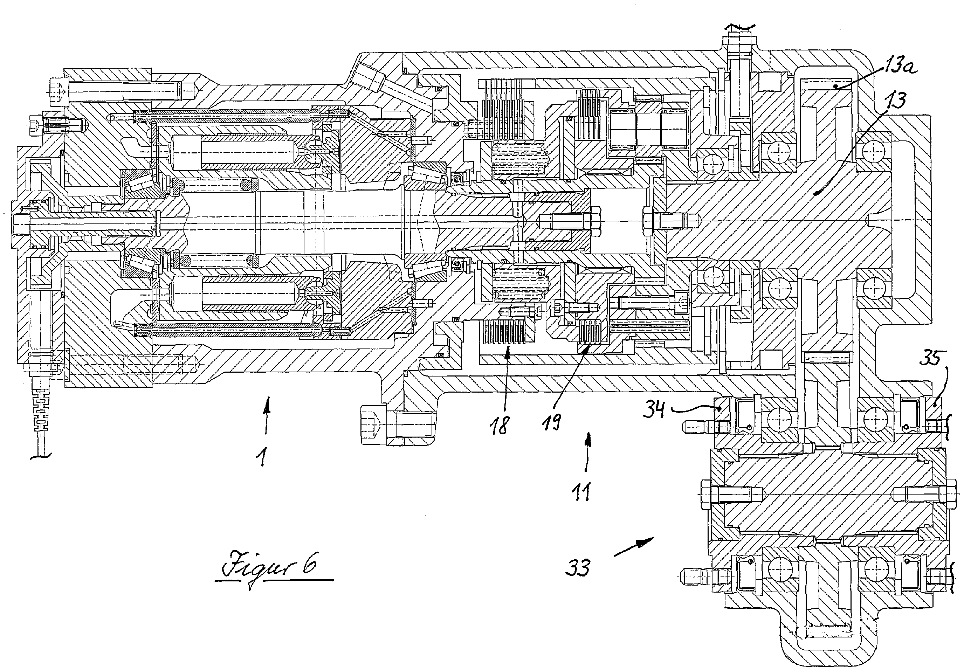

In Figur 6 ist eine Ausführungsvariante des hydromechanischen Getriebes gezeigt, bei der die Getriebewelle 13 des mit Lamellenkupplungen 18, 19 versehenen Stufenschaltgetriebes 11 mit einem z.B. angeformten Zahnrad 13a verbunden ist, das den Eingang einer Stirnradstufe eines nachgeschalteten Verteilergetriebes 33 bildet, welches mit dem Stufenschaltgetriebe 11 zu einer Baueinheit verbunden ist und zwei Abtriebsflansche 34, 35 aufweist. Das hydromechanische Getriebe kann daher in Form eines Einbausatzes als Achsverteilergetriebe verwendet werden, bei dem es in den Kraftfluss zwischen zwei Antriebsachsen einer allradgetriebenen Arbeitsmaschine geschaltet ist.

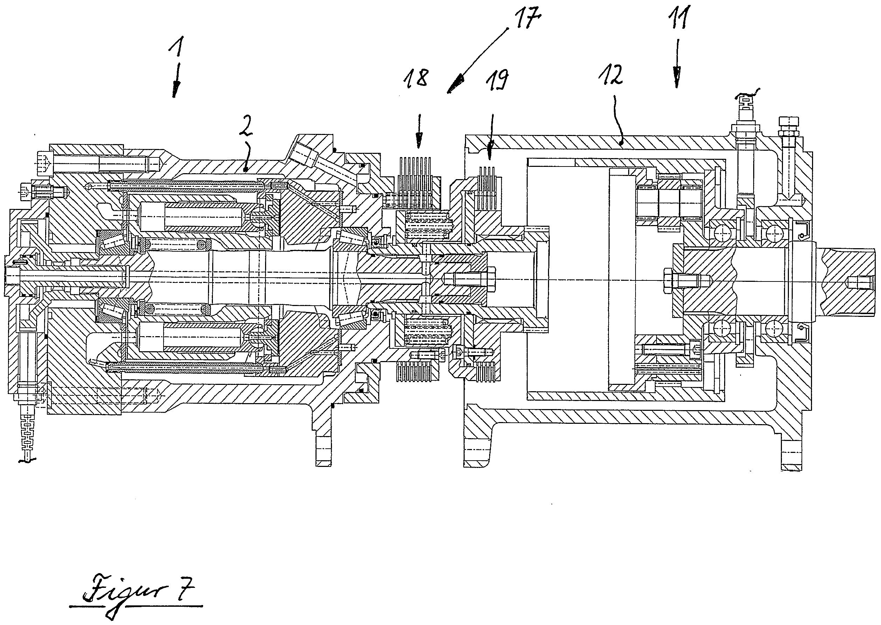

Figur 7 zeigt für die in Figur 3 dargestellte Ausführungsvariante des hydromechanischen Getriebes, bei der die Getriebeschalteinrichtung 17 mit Lamellenkupplungen 18, 19 zur Drehmomentübertragung versehen ist, die aus dem Hydromotor 1 und der Getriebeschalteinrichtung 17 bestehende, vormontierte Baueinheit. Diese wird mit dem ebenfalls vormontierten Stufenschaltgetriebe 11 zu einem Kompaktgetriebe verbunden, wobei dann das Getriebegehäuse 12 die an dem Hydromotor 1 gehalterte Getriebeschalteinrichtung 17 übergreift und mit dem Motorgehäuse 2 des Hydromotors 1 verschraubt ist.

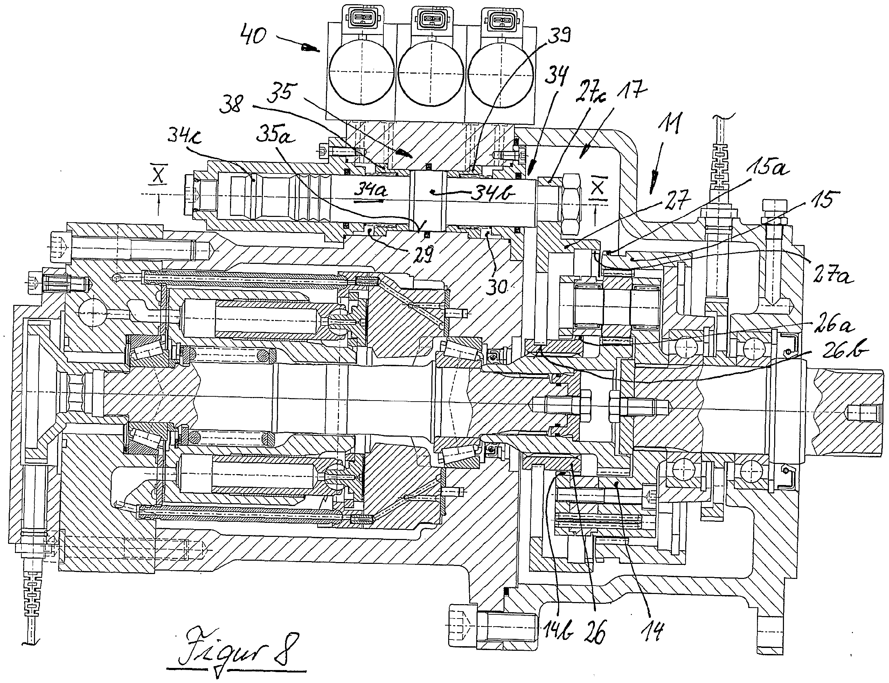

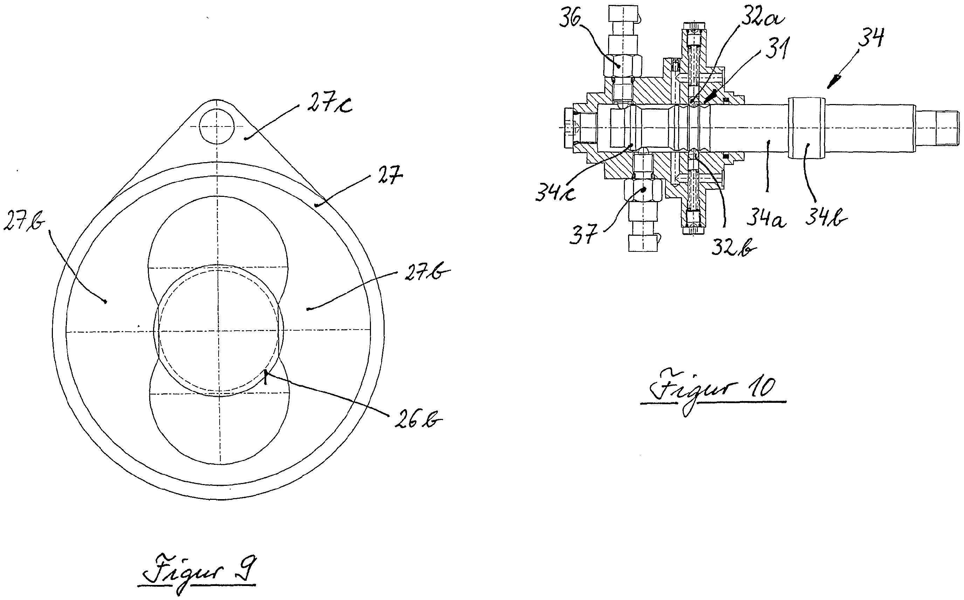

In Figur 8 ist eine Ausführungsvariante des hydromechanischen Getriebes gezeigt, bei der - analog zu der Variante gemäß Figur 5 - zur Drehmomentübertragung im Stufenschaltgetriebe 11 Schaltverzahnungen vorgesehen sind. Die Getriebeschalteinrichtung 17 unterscheidet sich dabei lediglich in Bezug auf den mit der Schaltmuffe 26 in Wirkverbindung stehenden Schaltaktuator 27. Dieser ist nicht direkt sondern indirekt hydraulisch betätigbar. Zu diesem Zweck ist der Schaltaktuator 27 an einem äußeren Radialfortsatz 27c (siehe auch Figur 9) mit einem Schaltkolben 34 eines mit dem Motorgehäuse 2 des Hydromotors 1 verbundenen (hier: angeformten) Schaltzylinders 35 verbunden. Der hydraulisch betätigbare, längsbewegliche Schaltkolben 34 dient dabei sowohl als Element, das den Schaltaktuator 27 hin- und herbewegt, als auch als Verdrehsicherung, d.h. als Drehmomentstütze, an der sich in der Schaltstellung, die dem Arbeitsgang entspricht, das Hohlrad 15 des Planetengetriebes über die Schaltverzahnung 15a des Hohlrads 15 und die Schaltverzahnung 27a des Schaltaktuators 27 am Hydromotor 1 abstützt.

Der Schaltkolben 34 ist mit einer Kolbenstange 34a und einem mittig angeordneten Kolbenabschnitt 34b versehen. Das getriebeferne Ende der Kolbenstange 34a ist als Arretierbolzen 31 ausgebildet (siehe auch Figur 10), der - analog zur Ausführungsvariante gemäß Figur 5 - zum Eingriff mit federbelasteten Arretierkugeln 32a, 32b ausgebildet ist. Axial daran anschließend ist die Kolbenstange 34a mit einem Bund 34c versehen, der mit zwei Schaltstellungsschaltern 36, 37 zusammenwirkt, um die Position des Schaltkolbens 34 und damit die Schaltstellung im Stufenschaltgetriebe 11 an eine übergeordnete Steuerung weitergeben zu können.

Gegen beide Stirnseiten des Kolbenabschnitts 34b sind im Durchmesser abgestufte, axial bewegliche Anschlagbuchsen 38, 39 anstellbar, die in einer beiderseits des Kolbenabschnitts 34b des Schaltkolbens 34 abgestuften Zylinderbohrung 35a des Schaltzylinders 35 angeordnet sind und mittels eines hydraulischen Ventilblocks 40, der den Öldruck in zwei Steuerdruckräumen 29, 30 steuert, zusammen mit dem Schaltkolben 34 hydraulisch beaufschlagt werden können. Mit Hilfe der Anschlagbuchsen 38, 39 soll ein direktes, d.h. unverzögertes Durchschalten vom Arbeitsgang zum Transportgang und zurück verhindert werden. Vielmehr wird stets zuerst für kurze Zeit die dem Leerlauf entsprechende Mittelstellung des Schaltkolbens 34 angefahren, um vor dem Einrücken des jeweils folgenden Ganges eine Synchronisationsdrehzahl durch entsprechende Beeinflussung des hydrostatischen Stufenlosgetriebes einstellen zu können.

Befindet sich der Schaltkolben 34 beispielsweise in einer Einstellung ganz links (entsprechend dem Transportgang im Stufenschaltgetriebe 11, bei dem sich auch die Schaltmuffe 26 und der Schaltaktuator 27 ganz links befinden und daher die Schaltverzahnungen 26a und 14a im Eingriff miteinander stehen, während die Schaltverzahnungen 27a und 15a frei sind), dann werden bei Druckbeaufschlagung des Steuerdruckraums 29 die Anschlagbuchse 38 und der Schaltkolben 34 nach rechts bewegt. Die Axialbewegung der Anschlagbuchse 38 wird an der zugeordneten Stufe der Zylinderbohrung 35a beendet.

Um eine Bewegung des Schaltkolbens 34 über die dem Leerlauf im Stufenschaltgetriebe 11 entsprechende Mittelstellung hinaus zu verhindern, die durch den an der Ringfläche zwischen dem Kolbenabschnitt 35b und der Kolbenstange 34a wirkenden Öldruck bewirkt würde, ist zugleich mit dem ersten Steuerdruckraum 29 (oder unmittelbar danach) auch der zweite Steuerdruckraum 30 mit Öldruck beaufschlagt worden, so dass sich die Anschlagbuchse 39 in einer Position befindet, in der sie als Axialanschlag für den Kolbenabschnitt 34b wirkt und den Schaltkolben 34 stoppt. Das Stufenschaltgetriebe 11 befindet sich somit im Leerlauf und es kann im hydrostatischen Stufenlosgetriebe durch Übersetzungsänderung eine Synchronisationsdrehzahl eingestellt werden.

Ist die Synchronisationsdrehzahl eingestellt, dann wird der Öldruck im Steuerdruckraum 30 abgesenkt oder weggenommen und der Schaltkolben 34 unter der Wirkung des nach wie vor im Steuerdruckraum 29 anstehenden Öldrucks weiter nach in der Figur rechts und damit aus der Leerlaufstellung heraus in eine Schaltstellung bewegt, die dem Arbeitsgang entspricht und in der die Schaltverzahnung 15 des Hohlrades 15 mit der Schaltverzahnung 27a des Schaltaktuators 27 in Eingriff steht.

## Patentansprüche

1. Hydromechanisches Getriebe mit einem durch eine Hydropumpe antreibbaren Hydromotor eines hydrostatischen Stufenlosgetriebes und einem an eine Triebwelle des Hydromotors angeschlossenen mechanischen Stufenschaltgetriebe, das durch eine Getriebeschalteinrichtung im Betrieb schaltbar ist, **dadurch gekennzeichnet, dass** die Getriebeschalteinrichtung (17) unmittelbar benachbart zum Hydromotor (1) angeordnet und mit diesem zu einer vormontierten Baueinheit zusammengefasst ist.

2. Hydromechanisches Getriebe nach Anspruch 1, **dadurch gekennzeichnet, dass** die Getriebeschalteinrichtung (17) im Bereich eines Axialabschnitts der Triebwelle (4) angeordnet ist, der aus einem Triebwellenbereich herausragt, welcher von zwei mit Abstand zueinander angeordneten Triebwellenlagern (5, 6) axial begrenzt ist.

3. Hydromechanisches Getriebe nach Anspruch 1 oder 2, **dadurch gekennzeichnet, dass** die Getriebeschalteinrichtung (17) hydraulisch betätigbar und am Hydromotor (1) gehaltert ist.

4. Hydromechanisches Getriebe nach Anspruch 3, **dadurch gekennzeichnet, dass** die Getriebeschalteinrichtung (17) mindestens einen axial beweglichen Schaltaktuator (18c; 19c; 27) aufweist, der durch einen in einem Steuerdruckraum (18e; 19e; 29; 30) anstehenden Öldruck betätigbar ist.

5. Hydromechanisches Getriebe nach Anspruch 4, **dadurch gekennzeichnet, dass** die Triebwelle (4) mit einem Längskanal (4a) versehen ist, der an einem getriebeseitigen Ende der Triebwelle (4) mit dem Steuerdruckraum (19e) der Getriebeschalteinrichtung (17) verbunden ist.

6. Hydromechanisches Getriebe nach Anspruch 5, **dadurch gekennzeichnet, dass** der Längskanal (4a) an einem getriebefernen Ende der Triebwelle (4) an eine Drehdurchführung (20) angeschlossen ist.

7. Hydromechanisches Getriebe nach Anspruch 6, **dadurch gekennzeichnet, dass** die Drehdurchführung (20) eine drehfeste Durchgangsbuchse (21) aufweist, die in einer an den zentrisch angeordneten Längskanal (4a) anschließenden, in die getriebeferne Stirnseite der Triebwelle (4) eingearbeitete Zentralbohrung (4b) im Stützbereich des getriebefernen Triebwellenlagers (5) endet.

8. Hydromechanisches Getriebe nach einem der Ansprüche 1 bis 7, **dadurch gekennzeichnet, dass** das Stufenschaltgetriebe (11) und der Hydromotor (1) miteinander zu einer vormontierten Getriebeeinheit verbunden sind.

9. Hydromechanisches Getriebe nach Anspruch 8, **dadurch gekennzeichnet, dass** das Stufengeschaltgetriebe (11) ein die Getriebeschalteinrichtung (17) umschließendes Getriebegehäuse (12) aufweist.

10. Hydromechanisches Getriebe nach einem der Ansprüche 1 bis 9, **dadurch gekennzeichnet, dass** das Stufenschaltgetriebe (11) ein Planetengetriebe, insbesondere einstufiges Planetengetriebe, aufweist, das ein Sonnenrad (16), einen mit Planetenrädern (14a) versehenen Planetenträger (14) und ein Hohlrad (15) umfasst.

11. Hydromechanisches Getriebe nach Anspruch 10, **dadurch gekennzeichnet, dass** das Sonnenrad (16) radial und axial auf der Triebwelle (4) des Hydromotors (1) abgestützt ist.

12. Hydromechanisches Getriebe nach Anspruch 9 oder 10, **dadurch gekennzeichnet, dass** der Planetenträger (14) auf einer Getriebewelle (13) des Stufenschaltgetriebes (11) befestigt ist.

13. Hydromechanisches Getriebe nach einem der Ansprüche 1 bis 12, **dadurch gekennzeichnet, dass** zur Drehmomentübertragung im Stufengeschaltgetriebe (11) Lamellenkupplungen (18, 19) vorgesehen sind.

14. Hydromechanisches Getriebe nach Anspruch 13 und einem der Ansprüche 10 bis 12, **dadurch gekennzeichnet, dass** eine Lamellenkupplung (18) vorgesehen ist, die wechselweise mit einem drehfesten Bauteil und dem Hohlrad (15) des Planetengetriebes gekoppelte Lamellen (18a) aufweist.

15. Hydromechanisches Getriebe nach Anspruch 13 oder 14, **dadurch gekennzeichnet, dass** ein Lamellenträger (18b) an einem Motorgehäuse (2) des Hydromotors (1) befestigt oder daran angeformt ist.

16. Hydromechanisches Getriebe nach einem der Ansprüche 13 bis 15, **dadurch gekennzeichnet, dass** ein Federspeicher (18d) zur Beaufschlagung einer Lamellenkupplung (18) in Schließrichtung vorgesehen ist.

17. Hydromechanisches Getriebe nach Anspruch 13 und einem der Ansprüche 10 bis 12, 14, 15 oder 16, **dadurch gekennzeichnet, dass** eine Lamellenkupplung (19) vorgesehen ist, die wechselweise mit dem Planetenträger (14) und dem Sonnenrad (16) gekoppelte Lamellen (19a) aufweist.

18. Hydromechanisches Getriebe nach Anspruch 17, **dadurch gekennzeichnet, dass** ein Federspeicher (19d) zur Beaufschlagung der Lamellenkupplung (19) in Schließrichtung vorgesehen ist

19. Hydromechanisches Getriebe nach einem der Ansprüche 1 bis 12, **dadurch gekennzeichnet, dass** zur Drehmomentübertragung im Stufenschaltgetriebe (11) Schaltverzahnungen (26a, 27a, 14b, 15a) vorgesehen sind.

20. Hydromechanisches Getriebe nach Anspruch 19, **dadurch gekennzeichnet, dass** eine Schaltverzahnung (26a) an einer axial beweglichen, drehsynchron mit der Triebwelle (4) des Hydromotors (1) gekoppelten Schaltmuffe (26) gebildet ist, durch einen direkt oder indirekt hydraulisch beaufschlagbaren Schaltaktuator (27) verschiebbar ist.

21. Hydromechanisches Getriebe nach Anspruch 20 und einem der Ansprüche 10 bis 12, **dadurch gekennzeichnet, dass** die Schaltverzahnung (26a) der Schaltmuffe (26) mit einer Schaltverzahnung (14b) des Planetenträgers (14) in Eingriff bringbar ist.

22. Hydromechanisches Getriebe nach Anspruch 20 oder 21, **dadurch gekennzeichnet, dass** der Schaltaktuator (27) drehfest gehaltert und mit einer Schaltverzahnung (27a) versehen ist, die mit einer Schaltverzahnung (15a) des Hohlrads (15) in Eingriff bringbar ist.

23. Hydromechanisches Getriebe nach einem der Ansprüche 20 bis 22, **dadurch gekennzeichnet, dass** der Schaltaktuator (27) mit einem Arretierbolzen (31) in Wirkverbindung steht, der Ringnuten (31 a) aufweist, die zum Eingriff mit einer federbelasteten Arretierkugel (32) ausgebildet sind.

24. Hydromechanisches Getriebe nach einem der Ansprüche 20 bis 23, **dadurch gekennzeichnet, dass** der Schaltaktuator (27) mit einem Schaltkolben (34) eines hydraulischen Schaltzylinders (35) verbunden ist.

25. Hydromechanisches Getriebe nach den Ansprüchen 23 und 24, **dadurch gekennzeichnet, dass** der Arretierbolzen (31) mit dem Schaltkolben (34) verbunden ist.

26. Hydromechanisches Getriebe nach Anspruch 24 oder 25, **dadurch gekennzeichnet, dass** der Schaltkolben (34) eine Kolbenstange (34a) und einen im Durchmesser vergrößerten, mittleren Kolbenabschnitt (34b) aufweist, der an beiden Stirnseiten jeweils mit einer im Außendurchmesser abgestuften Anschlagbuchse (38 bzw. 39) in Wirkverbindung bringbar ist, die in einem zur Abstufung korrelierenden Stufenbereich einer Zylinderbohrung (35a) des Schaltzylinders (35) angeordnet ist.

27. Hydromechanisches Getriebe nach Anspruch 12 oder Anspruch 12 und einem der Ansprüche 13 bis 26, **dadurch gekennzeichnet, dass** die Getriebewelle (13) des Stufenschaltgetriebes (11) mit einem eingangsseitigen Zahnrad (13a) einer nachgeschalteten Stirnradstufe eines Verteilergetriebes (32) verbunden ist.
